(19) Europäisches Patentamt
European Patent Office
Office européen des brevets

(11) **EP 1 649 242 B1**

(12) **EUROPÄISCHE PATENTSCHRIFT**

(45) Veröffentlichungstag und Bekanntmachung des Hinweises auf die Patenterteilung:
**19.09.2007 Patentblatt 2007/38**

(21) Anmeldenummer: **04738770.9**

(22) Anmeldetag: **24.06.2004**

(51) Int Cl.:
*G01B 9/02* (2006.01)     *G01N 21/45* (2006.01)

(86) Internationale Anmeldenummer:
**PCT/DE2004/001321**

(87) Internationale Veröffentlichungsnummer:
**WO 2005/015122 (17.02.2005 Gazette 2005/07)**

(54) **VERFAHREN ZUR BESTIMMUNG DER BRECHZAHL BEI INTERFEROMETRISCHEN LÄNGENMESSUNGEN UND INTERFEROMETERANORDNUNG HIERFÜR**

METHOD FOR DETERMINING THE REFRACTIVE INDEX DURING INTERFEROMETRIC LENGTH MEASUREMENT AND INTERFEROMETERIC ARRANGEMENT THEREFOR

PROCEDE DE DETERMINATION DE L'INDICE DE REFRACTION LORS DE MESURES DE LONGUEURS INTERFEROMETRIQUES ET DISPOSITIF INTERFEROMETRIQUE CORRESPONDANT

(84) Benannte Vertragsstaaten:
**AT BE BG CH CY CZ DE DK EE ES FI FR GB GR HU IE IT LI LU MC NL PL PT RO SE SI SK TR**

(30) Priorität: **25.07.2003 DE 10334350**

(43) Veröffentlichungstag der Anmeldung:
**26.04.2006 Patentblatt 2006/17**

(73) Patentinhaber: **Bundesrepublik Deutschland, vertr. durch das Bundesministerium f. Wirtschaft und Technologie,**
**38116 Braunschweig (DE)**

(72) Erfinder: **BODERMANN, Bernd**
**38122 Braunschweig (DE)**

(74) Vertreter: **Lins, Edgar**
**Gramm, Lins & Partner GbR,**
**Theodor-Heuss-Strasse 1**
**38122 Braunschweig (DE)**

(56) Entgegenhaltungen:
**WO-A-99/42787        US-A- 5 412 474**
**US-A- 6 014 216**

• **BODERMANN B, FLÜGGE J, MEINERS-HAGEN K: "Improved second-harmonic two-wavelength interferometer with refractive index correction without effect modulation" PROCEEDINGS OF SPIE- RECENT DEVELOPMENTS IN TRACEABLE DIMENSIONAL MEASUREMENTS II, Bd. 5190, Nr. 1, 4. August 2003 (2003-08-04), - 6. August 2003 (2003-08-06) Seiten 339-346, XP002302631 SAN DIEGO, CA, USA**

**Beschreibung**

Die Erfindung betrifft ein Verfahren zur Bestimmung der Brechzahl und/oder Kompensation des Brechzahleinflusses bei interferometrischen Längenmessungen mit Hilfe eines mit wenigstens zwei Messstrahlen mit wenigstens definierten, etwa in einem harmonischen Verhältnis zueinander stehenden Frequenzen beaufschlagten Interferometers, an dessen Ausgang interferometrisch Phasen für die wenigstens zwei Messstrahlen ausgewertet werden, wobei eine dem harmonischen Verhältnis der Frequenzen der Messstrahlen entsprechende Multiplikation der interferometrischen Phasen vorgenommen und wenigstens eine Phasendifferenz der so gebildeten Phasenwerte betrachtet wird.

Die Erfindung betrifft ferner eine Interferometeranordnung zur Durchführung des Verfahrens mit wenigstens einer kohärenten Strahlenquelle zur Generierung wenigstens zweier Messstrahlen mit definierten, etwa in einem harmonischen Verhältnis zueinander stehenden Frequenzen und einem Interferometer, dessen Ausgangssignale auf einen die Messstrahlen trennenden Strahlteiler gelangen, wobei die getrennten Messstrahlen auf opto-elektronische Wandler gelangen und wenigstens eines der Ausgangssignale der opto-elektrischen Wandler einem dem harmonischen Verhältnis der Frequenzen der Messstrahlen entsprechenden Multiplikator zugeführt wird.

Es ist bekannt, Abstandsmessungen bzw. Messungen von Längenänderungen physikalischer Längen mit Hilfe eines Interferometers durchzuführen. Bei einer derartigen Messung wird die optische Weglänge gemessen, die sich aus der physikalischen Weglänge und der integralen Brechzahl des Mediums auf der gemessenen Weglänge zusammensetzt. Der Einfluss der Brechzahl auf die Messung kann dadurch eliminiert werden, dass die interferometrische Messung mit zwei definierten unterschiedlichen Wellenlängen durchgeführt wird. Da die Brechzahl von der Wellenlänge abhängt, die physikalische Weglänge hingegen von der Wellenlänge unabhängig ist, lassen sich so Informationen über die physikalische Weglänge und die Brechzahl voneinander trennen.

US 4,948,254 beschreibt eine Vorrichtung, die nach dieser Dispersionsmethode arbeitet. Die beiden Wellenlängen werden von einem ArgonIonen-Laser in Kombination mit einem Frequenzverdopplerkristall geliefert. Durch die Verwendung einer Grundwelle und einer frequenzverdoppelten Welle erhält man für die Interferometrie zwei Wellen, die grundsätzlich phasenstarr sind. Der Verdopplerkristall befindet sich am Anfang der Messstrecke am Messarm eines Zweistrahl-Interferometers. Die hinlaufende Grundwelle erzeugt im Kristall eine kollinear laufende Oberwelle. Beide Wellen durchlaufen die Messstrecke. Beim Rücklauf durch den Kristall erzeugt die Grundwelle eine zweite Oberwelle, die aufgrund der Dispersion im durchlaufenden Medium eine Phasendifferenz gegenüber der ersten Oberwelle aufweist. Diese Phasendifferenz, die gemessen werden muss, stellt das Messsignal dar. Sie ist ein Maß für die Dispersion und damit für die Brechzahlen. Die Phasendifferenz ist nur gering von anderen Einflüssen, wie Position und Bewegungszustand des Interferometers abhängig, sodass die Phasendifferenz ein brauchbares Messsignal für eine genaue Messung darstellt. Problematisch ist allerdings, dass eine genaue Bestimmung der Phasen aufwändig und mit prinzipiellen Messunsicherheiten belastet ist.

US 5,404,222 beschreibt ein ähnliches System, bei dem der Verdopplerkristall vor dem Eintritt des verwendeten Lichts in das Interferometer durchlaufen wird. Außerdem findet eine Frequenzverdopplung am Ausgang des Interferometers statt.

Zur Verbesserung der Messgenauigkeit ist beispielsweise aus US 5,838,485 ein sogenanntes Superheterodyn-Interferometer bekannt. Auch hier wird ein Zwei-Wellenlängen-Interferometer mit harmonisch korrelierten optischen Wellen verwendet, um die Kompensation des Brechzahleinflusses mittels der Dispersionsmethode durchzuführen. Bei dem Superheterodyn-Interferometer werden die interferometrischen Phasen der optischen Grund- und Oberwelle jeweils auf Hochfrequenz-Heterodynfrequenzen abgebildet. Die interferometrische Phase des Heterodynsignals der Grundwelle wird verdoppelt. Die Differenz dieser verdoppelten Phase und der Phase des Heterodynsignals der Oberwelle ist proportional zur Dispersion. Der Vorteil der Superheterodyn-Interferometer besteht darin, dass die Empfindlichkeit der Brechzahlkompensation bezüglich der mechanischen Stabilität des Interferometers wesentlich geringer ist. Die erzielbare Genauigkeit der Messung wird jedoch durch die Bestimmung der Phasendifferenz begrenzt. Die Phasenmessungen müssen für die Hochfrequenzsignale um 1 bis 2 Größenordnungen genauer erfolgen als bei der eigentlichen Längenmessung. Für die Bestimmung der Phasendifferenz ist die Messung zweier unabhängiger Phasen notwendig. Möglichen Nichtlinearitäten bei der Phasenmessung beeinflussen die Messunsicherheit. Die Differenzphase ändert sich periodisch mit der Messstrecke, sodass die Brechzahlbestimmung nicht eindeutig ist. Weiter ist zur Bestimmung der Brechzahl eine Änderung der Messstrecke erforderlich. Das Verfahren ist somit nur für brechzahlkompensierte Verschiebemessungen, nicht jedoch für brechzahlkompensierte Positionsmessungen, beispielsweise in einem absolut messenden Interferometer, geeignet.

Aus US 6014216 ist ein Zwei-Wellenlängen-Interferometer für brechzahlkompensierte Positionsmessungen bekannt.

Aus US 2002/0001086 A1 ist es ferner bekannt, ein Zwei-Wellenlängen-Interferometer mit einem Refraktometer zu kombinieren, das in der Nähe der interferometrisch zu messenden Strecke plaziert ist. Das Refraktometer, das beispielsweise aus einem abgeglichenen Interferometer fester Weglängen besteht, wobei die Referenzstrecke im Vakuum und die Messstrecke in der Umgebungsluft verläuft, dient der Messung der Langzeitänderungen der Brechzahl und kann bei sich ändernder Luftzusammensetzung zur Bestimmung der inversen Dispersion A benutzt werden. Mit dieser Ergänzung kann die Brechzahl absolut und eindeutig bestimmt werden.

US 5412474 offenbart ein Interferometer mit in Abhängigkeit des Messignals rückgekoppelter Wellenlänge.

Der vorliegenden Erfindung liegt die Aufgabe zugrunde, ein Verfahren und eine Vorrichtung der eingangs erwähnten Art so zu verbessern, dass eine genauere Kompensation der Brechzahleinflüsse für Präzisionslängenmessungen möglich ist.

Zur Lösung dieser Aufgabe werden ein Verfahren nach Anspruch 1 und eine Vorrichtung nach Anspruch 6 vorgeschlagen. Das Verfahren der eingangs erwähnten Art ist erfindungsgemäß dadurch gekennzeichnet, dass wenigstens einer der Messstrahlen in seiner Frequenz variierbar ist, dass aus der gebildeten Phasendifferenz ein Steuersignal zur Veränderung der Frequenz des in seiner Frequenz veränderbaren Messstrahls gebildet wird, mit dem die Frequenz so geregelt wird, dass die Phasendifferenz zu Null wird und dass aus der Differenzfrequenz zwischen der in seiner Frequenz veränderbaren Messstrahl ($v_3$) und der Frequenz des anderen Messstrahls ($v_2$) die Brechzahl und/oder Kompensation des Brechzahleinflusses bestimmt wird.

Zur Lösung der Aufgabe ist erfindungsgemäß ferner eine Vorrichtung der eingangs erwähnten Art dadurch gekennzeichnet, dass wenigstens einer der Messstrahlen in seiner Frequenz mittels einer Frequenzsteuerung variierbar ist und dass mittels eines Phasenvergleichers für die Phasen der Ausgangssignale der opto-elektrischen Wandler ein eine Phasendifferenz repräsentierendes Steuersignal generiert und der Frequenzsteuerung zur Bildung eines Regelkreises für die interferometrischen Phasen zugeleitet wird.

Erfindungsgemäß wird ein interferometrischer Phasenregelkreis realisiert, der dafür sorgt, dass die integralen optischen Wellenlängen der beiden im Interferometer umlaufenden Strahlen entlang der Messstrecke exakt harmonisch korreliert sind. Die Korrelation entspricht dem harmonischen Frequenzverhältnis der Felder der Zwei-Frequenz-Strahlungsquelle. Hierfür wird die Frequenz eines der Messstrahlen um einen gewissen Frequenzbetrag, der Offset-Frequenz, verstellt. Die Differenzfrequenz zwischen dem exakt harmonischen Frequenzverhältnis und der durch den Regelkreis eingestellten Frequenz ist ein direktes Maß für die integrale Brechzahl auf der Messstrecke. Die Offset-Frequenz lässt sich leicht messen und ist insbesondere unabhängig von der Länge der Messstrecke und von mechanischen Instabilitäten des Interferometers. Da die Messung der Brechzahl erfindungsgemäß auf eine Frequenzmessung zurückführbar ist, wird prinzipiell eine höhere Messgenauigkeit errreicht, da Frequenzen sehr genau messbare physikalische Größen sind. Weiterhin ist die Frequenzmessung im Gegensatz zur Messung einer periodischen Phase a priori eindeutig und prinzipiell ohne Effektmodulation messbar.

Die Messung der Offset-Frequenz erfolgt vorzugsweise dadurch, dass wenigstens ein Referenzstrahl mit einer Frequenz erzeugt wird, die etwa der Frequenz eines der Messstrahlen entspricht und mit der Frequenz eines anderen Messstrahls gekoppelt ist und dass eine Frequenzdifferenz zwischen der Frequenz des Referenzstrahls und der Frequenz des entsprechenden Messstrahls gemessen wird.

Das erfindungsgemäße Verfahren und die erfindungsgemäße Interferometer-Anordnung können durch die Anwendung des Superheterodyn-Prinzips modifiziert werden. Insbesondere können dabei den überlagerten Messstrahlen in einem Referenzzweig des Interferometers Hochfrequenzen aufmoduliert werden, die im gleichen harmonischen Verhältnis zueinander wie die Frequenzen der Messstrahlen stehen.

In einer weiteren Modifikation der vorliegenden Erfindung können auch unterschiedliche Polarisationskomponenten verwendet werden, wobei eine Polarisationskomponente gegenüber der anderen um $\pi/2$ mittels einer $\lambda$-Verzögerungsplatte verschoben werden kann. Dadurch wird erreicht, dass für eine genaue Auswertung immer Signalanteile zur Verfügung stehen, die nicht Null sind und daher gut messbar sind.

Die Erfindung soll im Folgenden anhand von in der Zeichnung dargestellten Ausführungsbeispielen näher erläutert werden. Es zeigen:

Figur 1    eine schematische Darstellung einer erfindungsgemäßen Interferometeranordnung

Figur 2    eine schematische Darstellung einer Ausführungsform der erfindungsgemäßen Interferometeranordnung als Superheterodyn-Interferometer mit zwei Laserquellen

Figur 3    eine Variante der Ausführungsform gemäß Figur 2 mit einer einzigen Laserquelle.

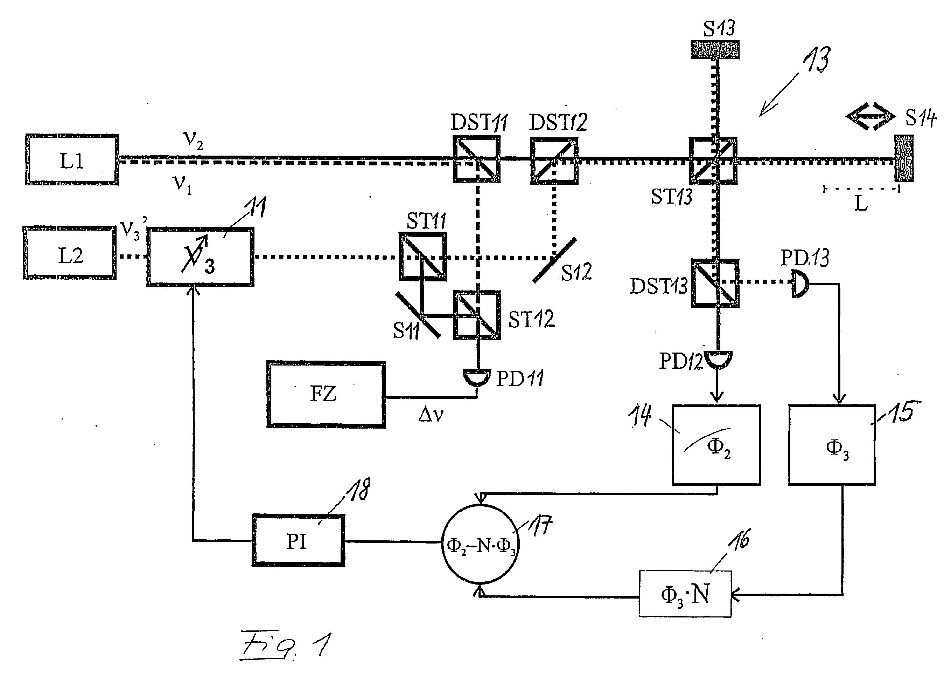

In der Ausführungsform gemäß Figur 1 ist ein Laser L1 als kohärente Strahlungsquelle vorgesehen, der einen Laserstrahl mit der Frequenz $v_1$ als Referenzstrahl und mit einer zweiten Frequenz $V_2$ als ersten Messstrahl aussendet. Der Laser L1 kann beispielsweise ein Second Harmonic Generator (SHG) Laser sein, der neben seiner Fundamentalfrequenz $v_1$ auch ein frequenzverdoppeltes Feld $V_2 = 2v_1$ emittiert. Die Anwendung der Erfindung ist aber nicht auf eine, Frequenzverdopplung beschränkt. Wesentlich ist eine harmonische Korrelierung der Frequenzen in der allgemeinen Form $k1 \cdot v_1 = k2 \cdot v_2$, wobei k1, k2 natürliche Zahlen sind. In einer bevorzugten, einfach zu realisierenden Form gilt $v_2 = N \cdot v_1$ (N natürliche Zahl > 1).

Eine zweite Laserquelle L2 emittiert einen Laserstrahl mit einer dritten Frequenz $v_3$' die der Frequenz $v_1$ entspricht.

In dem dargestellten Ausführungsbeispiel ist die Ausgangsfrequenz des Lasers L2 durch eine Frequenzsteuerung 11 steuerbar. Die Frequenzsteuerung kann ein akustooptischer Modulator (AOM), aber auch ein Frequenzsteuereingang eines in der Frequenz abstimmbaren Lasers L2 sein.

Der Ausgangsstrahl des Lasers L1 gelangt auf einen dichroitischen Strahlteiler DST 11, der den Strahl des Lasers L1 mit der Frequenz $v_1$ als Referenzstrahl ablenkt und den Strahl mit der Frequenz $v_2$ als ersten Messstrahl durchlässt. Der erste Messstrahl $v_2$ durchläuft einen zweiten dichroitischen Strahlteiler DST12 und gelangt in ein Interferometer 13.

Die Frequenz $v_3$' des zweiten Lasers L2 wird durch die Frequenzsteuerung 11 beeinflusst und tritt als Frequenz $v_3$ aus der Frequenzsteuerung 11 als zweiter Messstrahl aus. Er wird durch einen neutralen Strahlteiler ST11 in zwei Anteile geteilt, von denen einer aus dem Strahlengang abgelenkt und auf einen Spiegel S11 geleitet wird, wodurch der Teilstrahl auf einen weiteren neutralen Strahlteiler ST12 gelangt, wodurch der abgelenkte Anteil des zweiten Messstrahls $v_3$ kollinear dem von dem dichroitischen Strahlteiler DST11 abgelenkten Referenzstrahl überlagert wird. Der überlagerte Messstrahl gelangt auf einen Fotodetektor PD11. Stimmen die Frequenzen $v_3$ und $v_1$ überein, entsteht eine Differenzfrequenz $\Delta v = 0$. Liegt jedoch eine Frequenzabweichung vor, wird eine Schwingungsfrequenz $\Delta v = |v_1 - v_3|$ mit Hilfe eines Frequenzzählers FZ gemessen.

Der durch den Strahlteiler ST11 transmittierte Strahlenteil des zweiten Messstrahls $v_3$ wird über einen Spiegel S12 und den dichroitischen Strahlteiler DST12 dem ersten Messstrahl $v_2$ kollinear überlagert, sodass beide Messstrahlen $v_2$, $v_3$ auf einen Strahlteiler ST13 des Interferometers 13 gelangen. Der neutrale Strahlteiler ST13 teilt den ankommenden Messstrahl (gebildet aus den überlagerten Messstrahlen $v_1$, $v_2$) in einen auf einen Referenzspiegel S13 geleiteten Referenzarm und einen mit einem Messspiegel S14 gebildeten Messarm des Interferometers 13. Die vom Referenzspiegel S13 und vom Messspiegel S14 reflektierten Strahlen werden durch den Strahlteiler ST13 überlagert und gelangen auf einen dichroitischen Strahlteiler DST13 am Ausgang des Interferometers 13. Durch den dichroitischen Strahlteiler DST13 werden die beiden Frequenzen $v_1$, $v_3$ voneinander getrennt, da die Frequenz $v_3$ durch den dichroitischen Strahlteiler DST13 auf den Fotodetektor PD13 abgelenkt wird, während die Frequenz $v_2$ des ersten Messstrahls durch den dichroitischen Strahlteiler DST13 hindurchläuft und auf einen Photodetektor PD12 gelangt.

Mittels einer der bekannten Methoden zur Detektion der interferometrischen Phase werden die von den Messstrahlen $v_2$, $v_3$ erzeugten Phasen $\phi2$ und $\phi3$ mittels geeigneter Auswerteelektroniken 14, 15 separiert und verarbeitet.

Für die Phasen gilt

$$\Phi2 = \frac{4\pi \cdot L \cdot n_2 \cdot v_2}{c}$$

und

$$\Phi3 = \frac{4\pi \cdot L \cdot n_3 \cdot v_3}{c},$$

wobei $n_2$, $n_3$ die integrale Brechzahl entlang der Strecke L bei der optischen Frequenz $v_2$ bzw. $v_3$ ist und c die (Vakuum-) Lichtgeschwindigkeit darstellt.

Da die Frequenzen $v_2$ und $v_3$' harmonisch korrelieren, $v_2 = N \cdot v_3$', und der Frequenzregelbereich der Frequenzsteuerung 11 nur kleine Änderungen der Frequenz bewirkt, wie unten noch näher erläutert wird, gilt $v_2 \approx N \cdot v_3$.

Dann gilt auch

$$\Phi_2 \approx N \cdot \Phi_3$$

In einer Multiplikationsstufe 16 wird die interferometrische Phase $\Phi_3$ mit dem Faktor N multipliziert und die so gebildete Phase mit der Phase $\Phi_2$ in einem Phasenkomparator 17 verglichen, indem die Differenz

$$\Delta\Phi = \Phi_2 - N \cdot \Phi_3$$

gebildet wird. Dieses Differenzsignal wird über einen Regelverstärker 18, der im dargestellten Ausführungsbeispiel ein PI-Verstärker (Proportional-Integral-Verstärker) ist, verstärkt und der Frequenzsteuerstufe 11 so zugeleitet, dass als Regelkriterium

$$\Delta\Phi = 0$$

gilt. Somit wird ein interferometrischer Phasenregelkreis realisiert, der dafür sorgt, dass die integralen optischen Wellenlängen der beiden im Interferometer umlaufenden Strahlen entlang der Messstrecke L des Interferometers 13 exakt harmonisch korreliert sind gemäß

$$N \cdot \lambda_2 = \lambda_3, \text{ mit } \lambda_2 = \frac{c}{v_2 \cdot n_2}, \lambda_3 = \frac{c}{v_3 \cdot n_3}.$$

Damit lässt sich aus der Kenntnis der optischen Frequenz $v_2$ und der Messung der Frequenzdifferenz $\Delta V$ in dem Frequenzzähler FZ die integrale Brechzahl $n_2$ aus

$$n_2 = \frac{v_2 + N \cdot \Delta v}{v_2 + N \cdot \Delta v - N \cdot A \cdot \Delta v}$$

berechnen. Die in diesem Ausdruck enthaltene inverse Dispersion A, die als

$$A = \frac{n_2 - 1}{n_2 - n_3}$$

definiert ist, lässt sich für Messstrecken in Luft normaler Zusammensetzung aus der so genannten modifizierten Edlen Formel berechnen (vgl. G. Bönsch, E. Potulski "Measurement of the refractive index of air and comparison with modified Edlen's formulae", Metrologia 35 (1998), 133-139) bestimmen oder mit Hilfe einer geeigneten Vorrichtung messen (vgl. z.B. US 2002/0001086 A1).

Die physikalische Weglängendifferenz L im Interferometer ergibt sich damit zu

$$L = \frac{\phi_2 \cdot c}{4\pi \cdot n_2 \cdot v_2} = \frac{\phi_2 \cdot c}{4\pi \cdot \dfrac{v_2 + N \cdot \Delta v}{v_2 + N \cdot \Delta v - N \cdot A \cdot \Delta v} \cdot v_2} = \frac{c \cdot \phi_2 \cdot (v_2 + N \cdot \Delta v - N \cdot A \cdot \Delta v)}{4 \cdot \pi \cdot v_2 (v_2 + N \cdot \Delta v)}$$

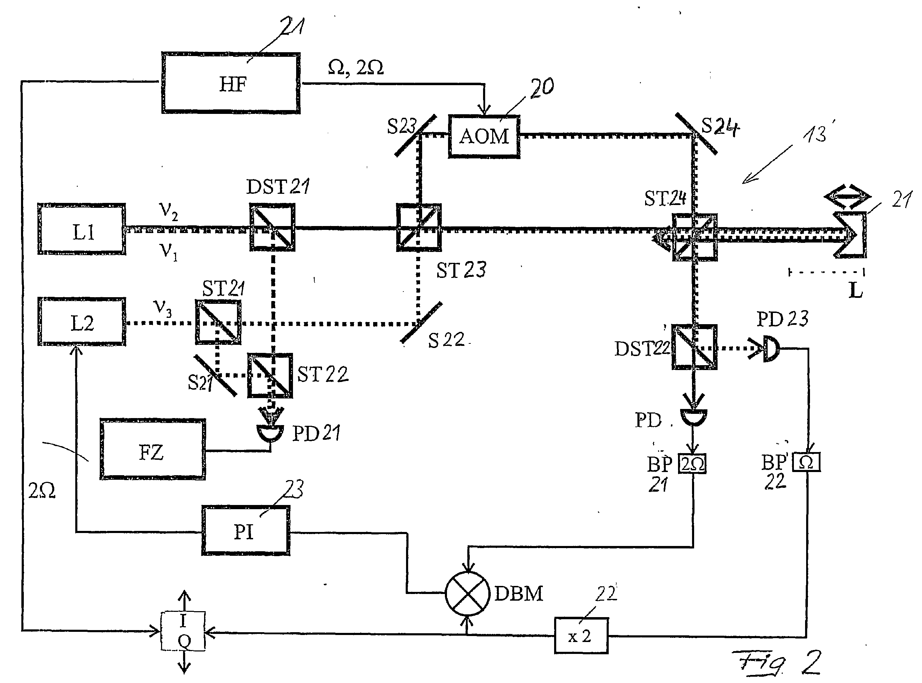

Daher lassen sich mit der Erfindung bei einer Verschiebemessung des Messspiegels S14 oder bei einer Positionsmessung sowohl die Brechzahl als auch die Brechzahlfluktuationen entlang der zu messenden Strecke mit hoher Präzision kompensieren. Bei dem in Figur 2 dargestellten Ausführungsbeispiel emittiert der erste Laser L1 die Frequenzen $v_1$, $v_2$, während der zweite Laser L2 als in seiner Frequenz abstimmbarer Laser ausgebildet ist und daher die Frequenz $v_3$ abstrahlt. Zur Messung der Frequenzdifferenz $\Delta v = |v_3-v_1|$ sind - wie in Figur 1 - der dichroitische Strahlteiler DST21, die neutralen Strahlteiler ST 21 und ST22 und der Spiegel S21 vorgesehen. Die optische Frequenzdifferenz wird durch den Photodetektor 21 elektrisch umgesetzt und in dem Frequenzzähler FZ elektrisch ausgewertet. Der zweite Messstrahl $v_3$ wird über den Spiegel S22 und den Strahlteiler ST23 erst im Messstrahl $v_2$ überlagert und in dieser Form auf das Interferometer 13' geleitet. Durch den Neutralstrahlteiler ST 23 werden die überlagerten Strahlen aber auch über einen Spiegel S23 auf einen akustooptischen Modulator (AOM) 20 geführt, der zumindest Teile der beiden Strahlen in der Frequenz definiert verschiebt. Hierbei wird die Frequenz des Strahls der optischen Frequenz $v_2$ um die (Radio-) Frequenz $2\Omega$ und die Frequenz des Strahls der optischen Frequenz $v_3$ um die Frequenz $\Omega$ verschoben. Hierzu werden die Frequenzen $\Omega$, $2\Omega$ über einen Hochfrequenzgenerator 21 auf einen Steuereingang des AOM 20 geleitet. Die beiden optischen Strahlen durchlaufen kollinear den AOM. Da gemäß dem dargestellten Ausführungsbeispiel die optischen Frequenzen $v_3$ und $v_2$ in sehr guter Näherung das gleiche Frequenzverhältnis bilden wie die Hochfrequenzen $\Omega$, und $2\Omega$, ist die Bragg-Bedingung im AOM in einer Raumrichtung gleichzeitig für die optische Frequenz $v_3$ und die Hochfrequenz $\Omega$ elektronisch und optisch gefiltert, wie unten noch erläutert wird, und stört daher das hier beschriebene Messverfahren nicht.

Die beiden im Strahlteiler ST23 kollinear überlagerten Teilstrahlen, die direkt in das Interferometer 13' geleitet werden, treten durch den Strahlteiler ST24 hindurch und werden an einem innerhalb der Mess-Weglänge L verschiebbaren Reflektor 21 reflektiert und durch den Strahlteiler ST24 auf einen dichroitischen Strahlteiler 22 geleitet. In dem dargestellten Ausführungsbeispiel ist der Reflektor 21 als verspiegeltes Dachkantenprisma ausgeführt. Am Ausgang des Strahlteilers 24 sind die reflektierten Messstrahlen mit den durch den AOM 20 modulierten Referenzstrahlen kollinear überlagert. Der dichroitische Strahlteiler DST22 separiert die Strahlen in zwei Teilstrahlen, die mittels Photodetektoren PD23 und PD24 in elektrische Signale umgesetzt werden. Der durch den dichroitischen Strahlteiler DST22 hindurchtretende Anteil weist eine Schwebung der Frequenz $2\Omega$ auf. Diese wird mittels eines geeigneten Bandpassfilters BP21 aus dem elektrischen Signal mit der Frequenz $2\Omega$ extrahiert. Analog erzeugen die an dem dichroitischen Strahlteiler DST22 reflektierten Strahlen auf dem Detektor PD23 ein Schwebungssignal der Frequenz $\Omega$, das aus dem Detektorsignal wiederum mittels eines geeigneten Bandpassfilters BP22 der Frequenz $\Omega$ extrahiert wird.

Bei diesem Heterodyn-Interferometer wird die durch eine Verschiebung des Reflektors 21 erzeugte interferometrische Phasenverschiebung zwischen Referenz- und Messstrahl auf eine gleich große Phasenverschiebung der Heterodynfrequenz abgebildet. Da $v_2 \approx 2 \cdot v_3$ und damit auch für die optischen Wellenlängen $\lambda_3 \approx 2 \cdot \lambda_2$ gilt, ist in dem hier beschriebenen Doppel-Heterodyn-Interferometer bei einer Verschiebung des Reflektors 21 die resultierende Phasenverschiebung des Heterodynsignals der Frequenz $2\Omega$ etwa doppelt so groß wie die resultierende Phasenverschiebung des Heterodynsignals der Frequenz $\Omega$. Die letztere Phasenverschiebung wird mit Hilfe eines Hochfrequenz-Frequenzverdopplers 22 verdoppelt und die Phase des verdoppelten Signals mit einem Phasenkomparator DBM in Form eines doppelt balancierten Mischers mit der Phase des Heterodynsignals der Frequenz $2\Omega$ verglichen. Der Phasenkomparator enthält ein nachgeschaltetes Tiefpassfilter mit geeigneter Grenzfrequenz $< < 4\Omega$.

Die Frequenz des vom Laser L2 emittierten Strahls $v_3$ wird mit Hilfe eines PI-Reglers 23 soweit verändert, dass das Ausgangssignal des Phasenkomparator DBM verschwindet, sodass für die optischen Wellenlängen gilt $\lambda_3 = 2 \cdot \lambda_2$. Um die Eindeutigkeit der Regelung herzustellen, die durch das periodische Ausgangssignal des DBM nicht für sich sichergestellt ist, kann man eine kleine Weglängendifferenz $\Delta L$ der Messlänge L des Interferometers 13' einstellen. Die Weglängendifferenz $\Delta L$ muss so die Bedingung für das mehrdeutige Ausgangssignal des DBM eine größere einzustellende Frequenzdifferenz $\Delta v$ als maximale Differenzfrequenz $\Delta v_{max}$ vorgegeben wird. In diesem Falls ist die Regelung eindeutig mit nur einem $\Delta v$ möglich.

Somit ist wieder ein interferometrischer Phasenregelkreis realisiert, der dafür sorgt, dass $\lambda_3 = 2 \cdot \lambda_2$ gilt. Es gilt:

$$n_2 = \frac{v_2 + 2 \cdot \Delta v}{v_2 + 2 \cdot \Delta v - 2 \cdot A \cdot \Delta v}$$

und für die physikalische Weglängendifferenz L im Interferometer

$$L = \frac{c \cdot \phi_2 \cdot (v_2 + 2 \cdot \Delta v - 2 \cdot A \cdot \Delta v)}{2 \cdot \pi \cdot v_2 \cdot (v_2 + 2 \cdot \Delta v}$$

Die hierfür benötigte Phase $\Phi_2$ kann mittels bekannter Techniken, etwa mittels einem kommerziell erhältlichen I/Q-Demodulator 24 gewonnen werden.

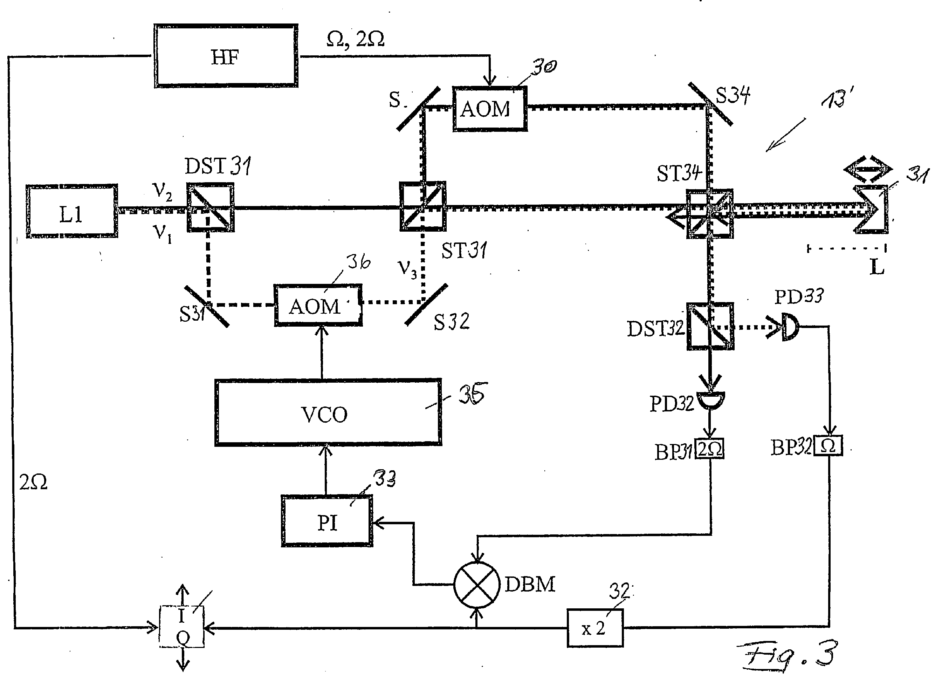

Eine mögliche Modifikation der Ausführung der Erfindung gemäß Figur 2, die mit nur einem Laser L1 auskommt, ist in Figur 3 dargestellt. Der vom Laser L1 emittierte Strahl der Frequenz $v_1$ wird mittels eines sehr breitbandigen, beispielsweise akustooptischen Frequenzschiebers AOM 36 um die Frequenz $\Delta v$ in der Frequenz verschoben, sodass $v_3 = v_1 + \Delta v$ gilt.

Derartige breitbandige Frequenzschieber mit spannungsgesteuertem Mikrowellentreiber (VCO) 35 sind kommerziell erhältlich. Im Übrigen entspricht das Ausführungsbeispiel im Wesentlichen der Figur 2, wobei sich das als Messsignal dienende Maß für die Frequenzdifferenz unmittelbar aus der Frequenz des VCO 35 ergibt.

## Patentansprüche

1.   Verfahren zur Bestimmung der Brechzahl und/oder Kompensation des Brechzahleinflusses bei interferometrischen Längenmessungen mit Hilfe eines mit wenigstens zwei Messstrahlen ($v_2$, $v_3$) mit wenigstens definierten, etwa in einem harmonischen Verhältnis zueinander stehenden Frequenzen beaufschlagten Interferometers (13, 13'), an dessen Ausgang interferometrisch Phasen für die wenigstens zwei Messstrahlen ($v_2$, $v_3$) ausgewertet werden, wobei eine dem harmonischen Verhältnis der Frequenzen der Messstrahlen ($v_2$, $v_3$) entsprechende Multiplikation der interferometrischen Phasen vorgenommen und wenigstens eine Phasendifferenz der so gebildeten Phasenwerte betrachtet wird, **dadurch gekennzeichnet, dass** wenigstens einer der Messstrahlen ($v_3$) in seiner Frequenz variierbar ist, dass aus der gebildeten Phasendifferenz ein Steuersignal zur Veränderung der Frequenz des in seiner Frequenz veränderbaren Messstrahls ($v_3$) gebildet wird, mit dem die Frequenz so geregelt wird, dass die Phasendifferenz zu Null wird und dass aus der Differenzfrequenz zwischen der in seiner Frequenz veränderbaren **Messstrahl** ($v_3$) und der Frequenz des anderen Messstrahls ($v_2$) die Brechzahl und/oder Kompensation des Brechzahleinflusses bestimmt wird.

2.   Verfahren nach Anspruch 1, **dadurch gekennzeichnet, dass** wenigstens ein Referenzstrahl ($v_1$) mit einer Frequenz erzeugt wird, die etwa der Frequenz eines der Messstrahlen ($v_3$) entspricht und mit der Frequenz eines anderen Messstrahls ($v_2$) gekoppelt ist, dass eine Frequenzdifferenz zwischen der Frequenz des Referenzstrahls ($v_1$) und der Frequenz des entsprechenden Messstrahls ($v_3$) gemessen wird und dass die gemessene Frequenzdifferenz als Differenzfrequenz zur Bestimmung der Brechzahl und/oder Kompensation des Brechzahleinflusses verwendet wird.

3.   Verfahren nach Anspruch 2, **dadurch gekennzeichnet, dass** einer der Messstrahlen ($v_2$) und der Referenzstrahl ($v_1$) durch eine kohärente Strahlenquelle (L1) mit einem Frequenzmultiplizierer generiert werden.

4.   Verfahren nach einem der Ansprüche 1 bis 3, **dadurch gekennzeichnet, dass** beide Messstrahlen ($v_2$, $v_3$) mittels eines Frequenzschiebers (36) aus einem Strahl einer kohärenten Strahlenquelle (L1) abgeleitet werden.

5.   Verfahren nach einem der Ansprüche 1 bis 4, **dadurch gekennzeichnet, dass** den überlagerten Messstrahlen ($v_2$, $v_3$) in einem Referenzzweig des Interferometers (13') Hochfrequenzen ($\Omega$, $2\Omega$) aufmoduliert werden, die im gleichen harmonischen Verhältnis zueinander wie die Frequenzen eines der Messstrahlen ($v_2$) zu dem Referenzstrahl ($v_1$).

6.   Interferometeranordnung zur Durchführung des Verfahrens nach einem der Ansprüche 1 bis 5, mit wenigstens einer kohärenten Strahlenquelle (L1, L2) zur Generierung wenigstens zweier Messstrahlen ($v_2$, $v_3$) mit definierten, etwa in einem harmonischen Verhältnis zueinander stehenden Frequenzen und einem Interferometer (13, 13'), dessen Ausgangssignale auf einen die Messstrahlen trennenden Strahlteiler (DST 13, DST 22, DST 32) gelangen, wobei die getrennten Messstrahlen auf opto-elektronische Wandler (PD12, PD13; PD22, PD23; PD32, PD33) gelangen und wenigstens eines der Ausgangssignale der opto-elektrischen Wandler einem dem harmonischen Verhältnis der Frequenzen der Messstrahlen ($v_2$, $v_3$) entsprechenden Multiplikator (16, 22, 32) zugeführt wird, **dadurch gekennzeichnet, dass** wenigstens einer der Messstrahlen ($v_3$) in seiner Frequenz mittels einer Frequenzsteuerung (18, 23, 35) variierbar ist und dass mittels eines Phasenvergleichers (17, DBM) für die Phasen der Ausgangssignale der opto-elektrischen Wandler (PD12, PD13, PD22, PD23; PD32, PD33) ein eine Phasendifferenz repräsentierendes Steuersignal generiert und der Frequenzsteuerung (18, 23, 35) zur Bildung eines Regelkreises für die interferometrischen Phasen ($\phi_2$, $\phi_3$) zugeleitet wird.

7.   Interferometeranordnung nach Anspruch 6, **dadurch gekennzeichnet, dass** die kohärente Strahlungsquelle (L1, L2) zur Generierung wenigstens eines Referenzstrahls ($v_1$) ausgelegt ist, dessen Frequenz etwa der Frequenz

eines der Messstrahlen ($v_3$) entspricht und mit der Frequenz eines anderen Messstrahls ($v_2$) harmonisch gekoppelt ist.

8. Interferometeranordnung nach Anspruch 6 oder 7, **gekennzeichnet durch** einen einer kohärenten Strahlenquelle (L1, L2) zugeordneten Frequenzmultiplizierer.

9. Interferometeranordnung nach einem der Ansprüche 6 bis 8, **dadurch gekennzeichnet, dass** in einem Referenzzweig des Interferometers (13, 13') ein Frequenzmodulator (30) eingesetzt ist dessen Steuerung mit einem Hochfrequenzgenerator für zwei Hochfrequenzen ($\Omega$, 2$\Omega$) verbunden ist, deren Frequenzen im Verhältnis der Frequenzen der Messstrahlen ($v_2$, $v_3$) zueinander stehen.

**Claims**

1. Method for determining the refractive index and/or compensation of the influence of refractive index during interferometric length measurements with the aid of an interferometer (13, 13') to which there are applied at least two measuring beams ($v_2$, $v_3$) having at least defined frequencies approximately at a harmonic ratio to one another, and at whose output phases for the at least two measuring beams ($v_2$, $v_3$) are interferometrically evaluated, the interferometric phases being multiplied in an interferometrically fashion corresponding to the harmonic ratio of the frequencies of the measuring beams ($v_2$, $v_3$) and at least one phase difference of the phase values thus formed being examined, **characterized in that** at least one of the measuring beams ($v_3$) is of variable frequency, **in that** from the phase difference formed a control signal is formed in order to vary the frequency of the variable frequency measuring beam ($v_3$) and is used to control the frequency such that the phase difference vanishes, and **in that** the differential frequency between the variable frequency measuring beam ($v_3$) and the frequency of the other measuring beam ($v_2$) is used to determine the refractive index and/or compensation of the influence of refractive index.

2. Method according to Claim 1, **characterized in that** at least one reference beam ($v_1$) is generated at a frequency that corresponds approximately to the frequency of one of the measuring beams ($v_3$) and is coupled to the frequency of another measuring beam ($v_2$), **in that** a frequency difference is measured between the frequency of the reference beam ($v_1$) and the frequency of the corresponding measuring beam ($v_3$), and **in that** the measured frequency difference is used as differential frequency for determining the refractive index and/or compensation of the influence of refractive index.

3. Method according to Claim 2, **characterized in that** one of the measuring beams ($v_2$) and the reference beam ($v_1$) are generated by a coherent radiation source (L1) with a frequency multiplier.

4. Method according to one of Claims 1 to 3, **characterized in that** the two measuring beams ($v_2$, $v_3$) are derived from a beam of a coherent radiation source (L1) by means of a frequency shifter (36).

5. Method according to one of Claims 1 to 4, **characterized in that** high frequencies ($\Omega$, 2$\Omega$) that are at the same harmonic ratio to one another as the frequencies of one of the measuring beams ($v_2$) to the reference beam ($v_1$) are modulated onto the superimposed measuring beams ($v_2$, $v_3$) in a reference branch of the interferometer (13').

6. Interferometer arrangement for carrying out the method according to one of Claims 1 to 5, having at least one coherent radiation source (L1, L2) for generating at least two measuring beams ($v_2$, $v_3$) having defined frequencies approximately at a harmonic ratio to one another and having an interferometer (13, 13') whose output signals are passed to a beam splitter (DST 13, DST 22, DST 32) separating the measuring beams, the separated measuring beams being passed to optoelectronic transducers (PD12, PD13; PD22, PD23; PD32, PD33), and at least one of the output signals of the optoelectric transducers being fed to a multiplier (16, 22, 32) corresponding to the harmonic ratio of the frequencies of the measuring beams ($v_2$, $v_3$), **characterized in that** the frequency of at least one of the measuring beams ($v_3$) can be varied by means of a frequency controller (18, 23, 35), and **in that** a phase comparator (17, DBM) for the phases of the output signals of the optoelectric transducers (PD12, PD13, PD22, PD23; PD32, PD33) is used to generate a control signal representing a phase difference, which control signal is fed to the frequency controller (18, 23, 35) to form a control loop for the interferometric phases ($\phi_2$, $\phi_3$).

7. Interferometer arrangement according to Claim 6, **characterized in that** the coherent radiation source (L1, L2) is designed to generate at least one reference beam ($v_1$) whose frequency corresponds approximately to the frequency of one of the measuring beams ($v_3$) and is harmonically coupled to the frequency of another measuring beam ($v_2$).

8. Interferometer arrangement according to Claim 6 or 7, **characterized by** a frequency multiplier assigned to a coherent radiation source (L1, L2).

9. Interferometer arrangement according to one of Claims 6 to 8, **characterized in that** use is made in a reference branch of the interferometer (13, 13') of a frequency modulator (30) whose controller is connected to a high frequency generator for two high frequencies ($\Omega$, $2\Omega$) whose frequency ratio to one another is that of the frequencies of the measuring beams ($v_2$, $v_3$).

**Revendications**

1. Procédé pour déterminer l'indice de réfraction et/ou la compensation de l'influence de l'indice de réfraction lors de mesures de longueurs interférométriques au moyen d'un interféromètre (13, 13') alimenté par au moins deux rayonnement de mesure ($\gamma_2$, $\gamma_3$) avec au moins deux fréquences définies sensiblement situées dans un rapport harmonique l'une par rapport à l'autre, à la sortie duquel sont évalués des phases harmoniques pour lesdits au moins deux rayonnement de mesure ($\gamma_2$, $\gamma_3$), une multiplication des phases interférométiques correspondant au rapport harmonique des fréquences des rayonnement de mesure ($\gamma_2$, $\gamma_3$) étant effectuée, et au moins une différence de phase de la valeur des phases ainsi établie étant considérée, **caractérisé en ce qu'**au moins un des rayonnements de mesure ($\gamma_3$) a une fréquence variable, **en ce qu'**à partir de la différence de phase établie, un signal de commande est engendré pour modifier la fréquence du rayonnement de mesure ($\gamma_3$) dont la fréquence est variable, avec lequel la fréquence est réglée de telle sorte que la différence de phase devient nulle et qu'à partir de la différence de fréquence entre la fréquence du rayonnement de mesure ($\gamma_3$) dont la fréquence est variable et la fréquence de l'autre rayonnement de mesure ($\gamma_2$) on détermine l'indice de réfraction et/ou la compensation de l'influence de l'indice de réfraction.

2. Procédé selon la revendication 1, **caractérisé en ce qu'**au moins un rayonnement de référence ($\gamma_1$) est obtenu avec une fréquence qui est sensiblement égale à la fréquence de l'un des rayonnements de mesure ($\gamma_3$) et qui est accordée avec la fréquence d'un autre rayonnement de mesure, **en ce qu'**une différence de fréquence entre la fréquence de la fréquence du rayonnement de référence ($\gamma_1$) et la fréquence du rayonnement de mesure correspondant ($\gamma_3$) est mesurée, et **en ce que** la différence de fréquence mesurée est utilisée en tant que différence de fréquence pour déterminer l'indice de réfraction et/ou la compensation de l'influence de l'indice de réfraction.

3. Procédé selon la revendication 2, **caractérisé en ce que** l'un des rayonnements de mesure ($\gamma_2$) et le rayonnement de référence ($\gamma_1$) sont générés par une source de rayonnement cohérent ($L_1$) avec un multiplicateur de fréquence.

4. Procédé selon l'une des revendications 1 à 3, **caractérisé en ce que** les deux rayonnements de mesure ($\gamma_2$, $\gamma_3$) sont dérivés au moyen d'un décaleur de fréquence (32) sur un rayonnement d'une source de rayonnement cohérent ($L_1$).

5. Procédé selon l'une des revendications 1 à 4, **caractérisé en ce que** les rayonnements de mesure mesurés ($\gamma_2$, $\gamma_3$) superposés sont modulés dans des hautes fréquences ($\Omega$, $2\Omega$) d'une branche de référence de l'interféromètre (13') dans le même rapport harmonique l'une par rapport à l'autre que les fréquences de l'un des rayonnements des mesure ($\gamma_2$) par rapport au rayonnement de référence ($\gamma_1$).

6. Dispositif interférométrique pour mettre en oeuvre le procédé selon l'une des revendications 1 à 5 comprenant au moins une source de rayonnements cohérents ($L_1$, $L_2$) pour générer au moins deux rayonnements de mesure ($\gamma_2$, $\gamma_3$) ayant des fréquences définies situées dans un rapport sensiblement harmonique l'une par rapport à l'autre et un interféromètre (13, 13') dont les signaux de sortie sont conduits sur un diviseur de rayonnements (DST 13, DST 22, DST 32) pour diviser les rayonnements de mesure, dans lequel les rayonnements de mesure divisés sont conduits sur un convertisseur opto-électronique (PD12, PD 13 ; PD22, PD 23, PD32, PD33) et au moins un des signaux de sortie du convertisseur opto-électrique dont la fréquence est dans le rapport harmonique des fréquences des rayonnements de mesure ($\gamma_2$, $\gamma_3$) est conduit vers un multiplicateur correspondant (16, 22, 32), **caractérisé en ce qu'**au moins l'un des rayonnements de mesure ($\gamma_3$) a une fréquence variable au moyen d'une commande de fréquence (18, 23, 35) et **en ce qu'**au moyen d'un comparateur de phases (17, DBM) pour les phases des signaux de sortie du convertisseur opto-électrique (PD12, PD 13, PD22, PD 23, PD32, PD33) un signal de commande représentatif d'une différence de phase générée et la commande de fréquence (18, 23, 35) est alimentée pour créer une boucle de réglage pour les phases interférométriques ($\phi_2$ et $\phi_3$).

7.  Dispositif interférométrique selon la revendication 6, **caractérisé en ce que** la source de rayonnements cohérents ($L_1$, $L_2$) est conçue pour générer au moins un rayonnement de référence ($\gamma_1$) dont la fréquence correspond sensiblement à la fréquence de l'un des rayonnements de mesure ($\gamma_3$) et qui est couplée de façon harmonique avec la fréquence d'un autre rayonnement de mesure ($\gamma_2$).

8.  Dispositif interférométrique selon la revendication 6 ou 7, **caractérisé par** un multiplicateur de fréquence associé à une source de rayonnements cohérents ($L_1$, $L_2$).

9.  Dispositif interférométrique selon l'une des revendications 6 à 8, **caractérisé en ce que** dans une branche de référence de l'interféromètre (13, 13') est inséré un modulateur de fréquence (30) dont la commande est reliée à un générateur de haute fréquence pour deux hautes fréquences ($\Omega$, $2\Omega$), dont les fréquences sont situées l'une par rapport à l'autre dans le rapport des fréquences des rayonnements de mesure ($\gamma_2$, $\gamma_3$).

Fig. 1

EP 1 649 242 B1

Fig 2

12

Fig. 3

EP 1 649 242 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4948254 A
- US 5404222 A
- US 5838485 A
- US 6014216 A
- US 20020001086 A1
- US 5412474 A

**In der Beschreibung aufgeführte Nicht-Patentliteratur**

- **G. BÖNSCH ; E. POTULSKI.** Measurement of the refractive index of air and comparison with modified Edlen's formulae. *Metrologia,* 1998, vol. 35, 133-139